# EUROPÄISCHE PATENTANMELDUNG

(11) **EP 3 339 635 A1**
(43) Veröffentlichungstag der Anmeldung: **27.06.2018**
(21) Anmeldenummer: 16206088.3
(22) Anmeldetag: 22.12.2016
(51) Int. Cl.: F03D 13/20, E04H 12/08, B23D 45/00, B23D 45/12

(54) **STAHLTURM FÜR EINE WINDENERGIEANLAGE SOWIE VERFAHREN ZUR HERSTELLUNG DESSELBEN**

(71) Anmelder: Nordex Energy GmbH, 22419 Hamburg (DE)
(72) Erfinder: Türk, Ibrahim, 22769 Hamburg (DE)
(74) Vertreter: Hauck Patentanwaltspartnerschaft mbB

(57) **Zusammenfassung**

Verfahren zum Herstellen eines Stahlturms für eine Windenergieanlage, das folgende Verfahrensschritte aufweist:
- Herstellen von mehreren zylindrischen und/oder konischen Turmsektionen, die in einer Turmlängsrichtung übereinander angeordnet werden können,
- Definieren von mindestens zwei in Turmlängsrichtung verlaufenden geplanten Trennlinien für eine der Turmsektionen und Bereitstellen eines Längsprofils für die geplante Trennlinie, das zwei parallel und beabstandet zu einander verlaufende Schenkel aufweist, wobei das Längsprofil mit seinen Schenkeln einstückig ausgebildet ist,
- Verbinden des Längsprofils mit der Turmsektion, wobei die Schenkel auf gegenüberliegenden Seiten der Trennlinie mit der Turmsektion verbunden werden,
- Durchtrennen der Turmsektion entlang der Trennlinie in durch eine Segmentgrenze voneinander getrennte Sektionssegmente, wobei das einstückige Längsprofil mit durchtrennt wird und jeder der Schenkel auf einer anderen Seite der Segmentgrenze mit einem Sektionssegment verbunden bleibt,
- Verbinden von zwei oder mehr Sektionssegmenten über die Schenkel des durchtrennten Längsprofils zu einer Turmsektion und
- Verbinden mehreren Turmsektionen in Turmlängsrichtung zu einem Stahlturm.

## Beschreibung

Die Erfindung betrifft einen Stahlturm für eine Windenergieanlage, der aus einer Mehrzahl von übereinander angeordneten und miteinander verbundenen Turmsektionen gebildet ist, von denen wenigstens eine Turmsektion aus miteinander verbundenen Sektionssegmenten besteht. Die Erfindung betrifft ebenfalls ein Verfahren zur Herstellung eines solchen Stahlturms.

Mit zunehmendem Bedarf an Windenergieanlagen mit höherer Leistung und somit größeren Abmessungen der Hauptkomponenten, wie Turm, Gondel und Rotorblätter, wurden die zulässigen Grenzen für Fahrzeugabmessungen, insbesondere die maximale Höhe von rund 4 Metern, erreicht. Auch die durch die logistische Infrastruktur gegebenen Grenzen, z. B. lichte Höhe unter Brücken, machen es erforderlich, Turmsektion mit mehr als etwa 4 Metern Durchmesser in mehrere Teile zu teilen.

Das Gebrauchsmuster DE 203 21 855 U1 beschreibt einen Stahlturm für eine Windenergieanlage, der eine Anzahl von zylindrischen oder konischen Turmabschnitten umfasst, wobei zumindest seine breiteren Abschnitte in zwei oder mehr längliche Schalensegmente unterteilt sind, die sich mittels vertikaler Flansche, die aneinander durch eine Vielzahl von Bolzen befestigt sind, zu einem vollständigen Turmabschnitt vereinigen, wobei die Schalen auch mit oberen bzw. unteren horizontalen Flanschen versehen sind, um eine Verbindung der Turmabschnitte aufeinander zu ermöglichen.

Die Patentanmeldung DE 10 2007 018 025 A1 zeigt einen Windenergieanlagenturm mit einer tragenden Turmaußenwand, welche eine umlaufende äußere Begrenzungsfläche aufweist und aus einer Vielzahl von Wandabschnitten besteht, die jeweils einen Mittelabschnitt und zwei in Längsrichtung des Turms verlaufende Randabschnitte aufweisen, die mit einer Vielzahl von Verbindungsbohrungen versehen sind, wobei die von den Randabschnitten definierten Flächen entlang der äußeren Begrenzungsfläche oder in konstantem Abstand dazu verlaufen und die Verbindungsbohrungen quer zu der äußeren Begrenzungsfläche ausgerichtet sind.

Aus der DE 10 2010 039 796 A1 ist ein Turm mit einem Adapterstück sowie ein Verfahren zur Herstellung eines Turmes bekannt, wobei hier eine untere rohrförmige Turmsektion aus Beton und eine obere rohrförmige Turmsektion aus Stahl vorgesehen ist. Derartige Hybridtürme werden derzeit für die Errichtung besonders hoher Windenergieanlagentürme bevorzugt, da mit dem Betonunterbau große Durchmesser möglich sind und auf die Unterbautürme in dieser Weise herkömmliche Stahlrohrturmsektionen oben aufgesetzt werden können, um größere Höhen und damit eine bessere Windausbeute zu erreichen.

Aus der WO 2015/161858 A1 ist ein Verfahren zur Herstellung einer Turmsektion für den Turm einer Windenergieanlage bekannt, bei dem die Turmsektion in Turmlängsrichtung in Sektionssegmente unterteilt ist. Die Sektionssegmente werden zunächst durch Durchtrennen der Turmwand erzeugt und später mit Hilfe von Flanschen wieder miteinander verbunden.

Es ist eine Aufgabe der Erfindung, einen Stahlturm für eine Windenergieanlage sowie ein Verfahren zu seiner Herstellung bereitzustellen, der bzw. das mit einfachen Mitteln erlaubt, aus segmentierten Turmsektionen eine verbundene Turmsektion präzise herzustellen.

Die Aufgabe wird durch einen Stahlturm nach Anspruch 1 oder nach Anspruch 3 gelöst und ebenso durch ein Verfahren zu deren Herstellung nach Anspruch 13. Vorteilhafte Ausgestaltungen bilden die Gegenstände der Unteransprüche.

Der erfindungsgemäße Stahlturm, insbesondere Stahlrohrturm für eine Windenergieanlage, umfasst eine Mehrzahl von zylindrischen und/oder konischen Turmsektionen, welche bevorzugt mittels horizontaler Ringflansche und/oder Ringflanschsegmente miteinander verbunden sind. Wenigstens eine Turmsektion ist in mehrere, vorzugsweise drei Sektionssegmente unterteilt, die jeweils mittels Längsprofile, die eine Vielzahl von Durchgangsbohrungen aufweisen, und durch Verbindungsmittel zu einer vollständigen Turmsektion verbunden sind. Die vertikal angebrachten Längsprofile besitzen wenigstens zwei, bevorzugt planparallele Schenkel sowie einen die Schenkel verbindenden Steg. Das einstückige Längsprofil ist beidseitig an die Innenseite der Wandung der Turmsektion angeschweißt. Das einstückige Längsprofil wird gemeinsam mit der Turmwandung in Längsrichtung, vorzugsweise mittig durchtrennt, wobei auch der Steg des einstückigen Längsprofils geteilt wird. Die durch das Durchtrennen des Längsprofils gebildeten Stegabschnitte besitzen bevorzugt auf ihren einander zugewandten Seiten Trennabschnitte, die durch das Durchtrennen gebildet wurden. Die erfindungsgemäßen Turmsektionen sind dabei jedoch nicht auf zwei oder drei Sektionssegmente begrenzt, vielmehr sind auch Turmsektionen umfasst, die vier oder mehr Sektionssegmente aufweisen.

Der erfindungsgemäße Stahlturm nach Anspruch 3 stimmt in seinen Merkmalen mit dem Stahlturm aus Anspruch 1 weitgehend überein. Ein Unterschied liegt in der Ausgestaltung des Längsprofils nach dem Durchtrennen. Nach Anspruch 3 besitzt das durchtrennte Längsprofil nicht zwei einander zugewandte Stegabschnitte, sondern Trennabschnitte auf den einander zugewandten Seiten der Schenkel. Die Längsprofile in beiden Ausgestaltungen der Erfindung besitzen vor und nach dem Durchtrennen zwei Schenkel.

Gemäß der Erfindung wird die Aufgabe dadurch gelöst, dass ein Verfahren zum Herstellen eines Stahlrohrturms für eine Windenergieanlage bereitgestellt wird, bei dem Turmwand und Längsprofil gemeinsam bei einem Trennvorgang entlang einer Segmentgrenze durchtrennt werden.

In einer vorteilhaften Ausbildung der Erfindung umfasst die Turmsektion wenigstens zwei Sektionsabschnitte, die entlang ihrer aneinander angrenzenden horizontalen ringförmigen Stirnseiten zusammengeschweißt und entlang der freien obersten und untersten Stirnseite mit horizontalen Ringflanschen verschweißt sind, wobei die Ringflansche an vorbestimmten Positionen in wenigstens zwei, vorzugsweise drei oder mehr Ringflanschsegmente teilbar sind. Die Ringflansche besitzen eine Vielzahl von Durchgangsbohrungen für Verbindungsmittel, beispielsweise Schrauben, Gewindebolzen und Gewindestangen.

Jedes Sektionssegment einer Turmsektion weist an seiner oberen und unteren Stirnseite jeweils wenigstens ein Ringflanschsegment auf. Die Bogenlänge des unteren Ringflanschsegments ist größer oder kleiner oder gleich der Bogenlänge des oberen Ringflanschsegments, wobei die Ringflanschsegmente eine Mehrzahl von Durchgangsbohrungen für Verbindungsmittel, wie Gewindebolzen oder dergleichen aufweisen.

In einer vorteilhaften Weiterbildung der Erfindung sind die einstückigen Längsprofile bevorzugt als gleichschenkelige U-Profile, H-Profile, C-Profile, I-Profile, Hut-Profile oder Doppel-T-Profile ausgebildet. Die Nutzung von doppelschenkeligen Profilen mit einem verbindenden Steg bietet gegenüber zwei angeschweißten Flacheisen erhebliche Vorteile, da insgesamt weniger Einzelteile zu handhaben sind. Eine Planparallelität der Schenkel bringt das Längsprofil bereits mit sich, diese bleibt auch beim Durchtrennen erhalten.

In einer vorteilhaften Ausgestaltung des Längsprofils weisen dessen Stege jeweils turmwandseitig eine vorzugsweise U- oder V-förmige Hohlkehle auf, welche in Längsrichtung verläuft. Diese Hohlkehle erfüllt insbesondere zwei Funktionen: Es wird damit zum einen eine vorteilhafte Querschnitts- und damit Materialreduzierung für einen nachfolgenden Längsschnitt erzielt, zum anderen wird beidseitig der Trennlinie eine Hohlkehle für eine Schweißnaht zum Versiegeln eines nach einem Längsschnitt möglicherweise entstandenen Spalts geschaffen. Die beidseitig der Hohlkehle verbleibenden Stegabschnitte bilden sichere, insbesondere kippfreie Anlageflächen zur Innenseite der Turmwand. Zur weiteren Verbesserung des Schweißvorgangs weisen die vertikal angeordneten Längsprofile an den nach außen gerichteten Übergängen von den Schenkeln zum rechtwinkligen Steg jeweils eine Fase in Längsrichtung zur Anbringung einer Schweißnaht auf.

Eine bevorzugte Verbindung eines Längsprofils erster Art, insbesondere in Form von U-, C- oder Hut-Profilen, mit der Rohrwandung der Turmsektion erfolgt derart, dass beispielsweise das Längsprofil mit seinem Steg zur Innenseite der Wandung einer Turmsektion gerichtet angeschweißt ist. Bei dem einen nach oben offenen C-Profils, bei dem zwei nach innen gebogene rechtwinklige Verlängerungen der Schenkel einander zugewandt sind und deren Abstand im Wesentlichen der Breite des Schlitzes im Steg entspricht, ergibt sich der weitere Vorteil, dass bei einer späteren Montage der Sektionssegmente Distanzelemente verzichtbar sind, da die besagten Verlängerungen gegeneinander gezogen werden und somit die Funktion der Distanzelemente übernehmen, wodurch sich eine vorteilhafte Reduzierung der Montagezeiten auf der Baustelle ergibt.

Eine bevorzugte Anordnung zur Verbindung einer zweiten Art Längsprofile, insbesondere in Form von H-, I-, oder Doppel-T-Profilen, aber auch von U-, C- oder Hut-Profilen, mit der Rohrwandung der Turmsektion erfolgt derart, dass die Längsprofile mit ihrem Steg zur Innenseite der Wandung einer Turmsektion gerichtet angeschweißt sind. Bei dem erfindungsgemäßen Gebrauch eines nach oben offenen H-Profils, bei dem der Steg von der Innenseite der Wandung einer Turmsektion beabstandet ist, kann die Breite des Schlitzes im Steg vorteilhaft so gewählt sein, dass bei einer späteren Montage der Sektionssegmente Distanzelemente verzichtbar sind, da die Stegstirnseiten gegeneinander gezogen werden und somit die Funktion der Distanzelemente übernehmen, wodurch sich eine vorteilhafte Reduzierung der Montagezeiten auf der Baustelle ergibt.

Es hat sich als vorteilhaft herausgestellt, dass die Länge der parallelen und beabstandeten Längsprofile eines Sektionsabschnitts größer ist als die Länge des Sektionsabschnitts selbst, weil dadurch die horizontalen Schweißnähte der Verbindung der Sektionsabschnitte überbrückt werden können.

Der erfindungsgemäße Stahlrohrturm bietet zeitliche und wirtschaftliche Einsparungen bei gegenwärtigen und zukünftigen Türmen mit großem Durchmesser, zudem stehen Windenergieanlagen mit den erfindungsgemäßen Stahlrohrtürmen schneller zur Energiegewinnung zur Verfügung. Ein zeitsparender Aspekt der Nutzung von Sektionssegmenten liegt darin, dass diese zweckmäßigerweise mit Einbauten in Form von Komponenten für eine Befahranlage, Leiterabschnitten, Kabelhalteeinrichtungen, Stromschienen und/oder anderen Einbauten versehen werden können, die in Längsrichtung des Turmes bzw. der Sektionssegmente verlaufen, bevor die Sektionssegmente zum Montageort transportiert werden. Ein weiterer Vorteil der Sektionssegmente liegt darin, dass diese einfacher, insbesondere mit kleineren Beschichtungsanlagen oberflächenbeschichtet und/oder lackiert werden können, bevor sie zum Montageort transportiert werden.

In einer vorteilhaften Weise der Durchführung des Verfahrens für eine weitere Bearbeitung wird die Turmsektion mittels eines Hebezeugs oder eines Flurförderzeugs oberhalb wenigstens einer bewegbaren Schneideinrichtung derart verbracht und auf Stützmitteln einer Hubeinrichtung abgesetzt, dass die erste geplante axiale Trennlinie in einer 6-Uhr-Position, also nach unten gerichtet, positioniert ist. Entsprechend der Positionen der Ziffern 6 und 12 auf einem Zifferblatt einer Uhr bezeichnen die 6-Uhr-Position die tiefste, die 12-Uhr-Position die höchste Position. Auch der noch nicht mit den Ringflanschen zur Turmsektion fertiggestellte Rohrkörper kann entsprechend bearbeitet werden.

Weiterhin umfasst das Verfahren bevorzugt, dass zur Bildung einer Turmsektion an die stirnseitigen kreisringförmigen Stirnflächen des Rohrkörpers oder eines Sektionsabschnitts jeweils ein geschlossener Ringflansch in einer, auf die Umfangsrichtung bezogen, vorbestimmten Lage angeschweißt wird, wobei die Ringflansche an vorbestimmten Positionen Teilabschnitte mit einem reduzierten Querschnitt aufweisen und die Teilabschnitte mit den geplanten Trennlinien zusammenfallen bzw. mit diesen fluchten. Nach dem Durchtrennen bilden die Trennlinien die Segmentgrenzen und der Ringflansch besteht aus Ringflanschsegmenten.

In einer besonders bevorzugten Durchführung des Verfahrens werden mit dem nachfolgenden Schritt die Ringflansche der Turmsektion stirnseitig mit bewegbaren oder beweglichen Vorrichtungen verbunden, insbesondere verschraubt, wobei die Vorrichtungen vorzugsweise als rotierbare Aufnahmeräder oder drehbare Rahmen ausgebildet sein können. Mittels dieser Vorrichtungen lässt sich eine Turmsektion besonders schonend drehen, d. h., ohne dass sich an der Außenhülle des Rohrkörpers Spuren von Laufrollen abzeichnen, wie dies beispielsweise bei Rollenbetten der Fall sein kann.

In einer weiteren besonders bevorzugten Durchführung des Verfahrens werden mit einem weiteren Schritt die Turmsektion oder der Rohrkörper mittels eines Hebezeugs oder eines Flurförderzeugs auf zwei oder mehr parallel zueinander verlaufende Balken gesetzt, wobei die Turmsektion so positioniert ist, dass die erste geplante axiale Trennlinie in der 6-Uhr-Position im Wesentlichen mittig zwischen den parallelen Balken verläuft. Die Balken gehören zu einer Halteeinrichtung, auf der die Turmsektion aufliegt und die einem Durchbiegen der Turmsektion entgegenwirkt.

Mit einem weiteren bevorzugten nachfolgenden Schritt des erfindungsgemäßen Verfahrens wird die wenigstens eine bewegbare Schneideinrichtung benachbart zu einem ersten Ringflansch in eine Startposition bewegt und anschließend wird in einem weiteren Schritt das Schneidwerkzeug, insbesondere ein Scheibenfräser oder ein Sägeblatt, unter Rotation mittels eines vertikal bewegbaren Werkzeugträgers mit dem ersten Ringflansch an der ersten vorbestimmten Position in Kontakt gebracht.

In einer besonders bevorzugten Durchführung des Verfahrens wird mit dem nachfolgenden Schritt der erste Ringflansch mittels des Schneidwerkzeugs an der ersten vorbestimmten Position mit reduziertem Querschnitt durchtrennt und in einem unmittelbar nachfolgenden Schritt wird das Schneidwerkzeug kontinuierlich entlang der ersten axialen Trennlinie durch die Rohrwandung sowie den Steg des mit der Rohrwandung verbundenen Längsprofils geführt. Bevorzugt ist die Rotationsrichtung des Schneidwerkzeugs so gewählt, dass die anfallenden Späne nach unten abgeführt werden. Das Schneidwerkzeug wird dabei kontinuierlich weiter entlang der ersten axialen Trennlinie durch die Rohrwandung nebst dem damit verbundenen Steg des Längsprofils und schließlich durch den zweiten Ringflansch geführt. Nachfolgend wird das Schneidwerkzeug in seine Startposition zurückbewegt. Mit dem erfindungsgemäßen Verfahren ist es möglich, den Schneidprozess automatisch über die gesamte Länge der Turmsektion, insbesondere ohne ein manuelles Umsetzen einer Schneidvorrichtung durchzuführen.

Nach dem Fertigstellen des ersten Längsschnittes durch die Turmsektion umfasst das Verfahren bevorzugt Schritte zum Herstellen von weiteren Längsschnitten, wobei zunächst ein Drehen der Turmsektion um ihre Längsachse, z. B. um 120°, vorzugsweise mittels der drehbaren Aufnahmeräder erfolgt, sodass die geplante zweite axiale Trennlinie in der 6-Uhr-Position positioniert ist.

In Fortsetzung werden mit den nachfolgenden Schritten weitere Längsschnitte mit dem Schneidwerkzeug hergestellt. Im Einzelnen umfasst dies hierfür folgende Schritte: Durchtrennen des ersten Ringflansches an dem zweiten vorbestimmten Teilabschnitt. Unmittelbar nachfolgend wird das Schneidwerkzeug kontinuierlich entlang der zweiten axialen Trennlinie durch die Rohrwandung sowie den Steg des Längsprofils geführt. Schließlich wird der zweite Ringflansch an dem zweiten vorbestimmten Teilabschnitt durchtrennt.

Nachfolgend erfolgt ein weiteres Drehen der Turmsektion um ihre Längsachse, bevorzugt mittels der rotierbaren Aufnahmeräder, z. B. um weitere 120°, bis das erste freigeschnittene Sektionssegment im Wesentlichen mittig in 12-Uhr-Position positioniert ist. Es folgen das Verbinden des Sektionssegments mit Anschlagmitteln eines Hebezeugs, Bewegen des Sektionssegments mittels des Hebezeugs und/oder der Stellmittel der Aufnahmeräder radial nach außen, Lösen des Sektionssegments von den Aufnahmerädern, Heben und Absetzen des Sektionssegments auf einen Transportanhänger mittels des Hebezeugs, Abtransportieren des Sektionssegments, vorzugsweise zu einer nachgeordneten Bearbeitungsanlage, insbesondere eine Beschichtungs- und/oder Lackieranlage.

Nachstehend sind Ausführungsbeispiele des Stahlturmes, insbesondere eine Turmsektion gemäß der Erfindung unter Bezugnahme auf die beigefügten Zeichnungen beschrieben, in denen
- Fig. 1: eine perspektivische Gesamtansicht einer Windenergieanlage,
- Fig. 2: eine Perspektivansicht einer erfindungsgemäßen Turmsektion,
- Fig. 3a: eine Querschnittsansicht eines erfindungsgemäßen vertikalen Längsprofils einer ersten Ausbildung in einer ersten Herstellungsphase,
- Fig. 3b: eine Querschnittsansicht des erfindungsgemäßen vertikalen Längsprofils aus Fig. 3a in einer zweiten Herstellungsphase,
- Fig. 3c: eine Querschnittsansicht des erfindungsgemäßen vertikalen Längsprofils aus Fig. 3a in einer dritten Herstellungsphase,
- Fig. 4a: eine Querschnittsansicht eines erfindungsgemäßen vertikalen Längsprofils einer zweiten Ausbildung in einer ersten Herstellungsphase,
- Fig. 4b: eine Querschnittsansicht eines erfindungsgemäßen vertikalen Längsprofils aus Fig. 4a in einer zweiten Herstellungsphase,
- Fig. 4c: eine Querschnittsansicht eines erfindungsgemäßen vertikalen Längsprofils aus Fig. 4a in einer dritten Herstellungsphase,
- Fig. 5: eine Querschnittsansicht eines erfindungsgemäßen vertikalen Längsprofils in einer dritten Ausbildung,
- Fig. 6: eine Draufsicht eines T-Ringflansches,
- Fig. 7: einen vergrößerten Ausschnitt des T-Ringflansches aus Fig. 6,
- Fig. 8: eine Querschnittsansicht des T-Ringflansches aus Fig. 6,
- Fig. 9: einen vergrößerter Ausschnitt eines L-Ringflansches,
- Fig. 10: eine Querschnittsansicht des L-Ringflansches aus Fig. 9,
- Fig. 11: einen vergrößerten Ausschnitt eines L-Ringflansches und einer Adapterplatte,
- Fig. 12: eine Querschnittsansicht des L-Ringflansches und der Adapterplatte aus Fig. 11,
- Fig. 13: eine perspektivische Gesamtansicht einer Turmsektion in einer Bearbeitungsstation,
- Fig. 14: eine perspektivische Ansicht einer Schneideinrichtung und
- Fig. 15a-c: eine Querschnittsansicht eines erfindungsgemäßen vertikalen Längsprofils in einer Ausbildung ohne Steg in drei verschiedenen Herstellungsphasen zeigen.

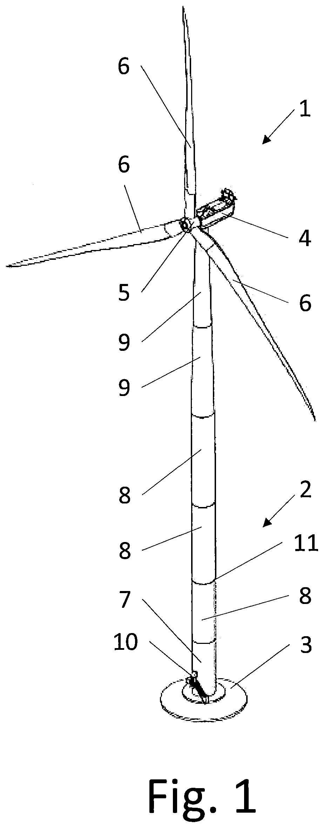

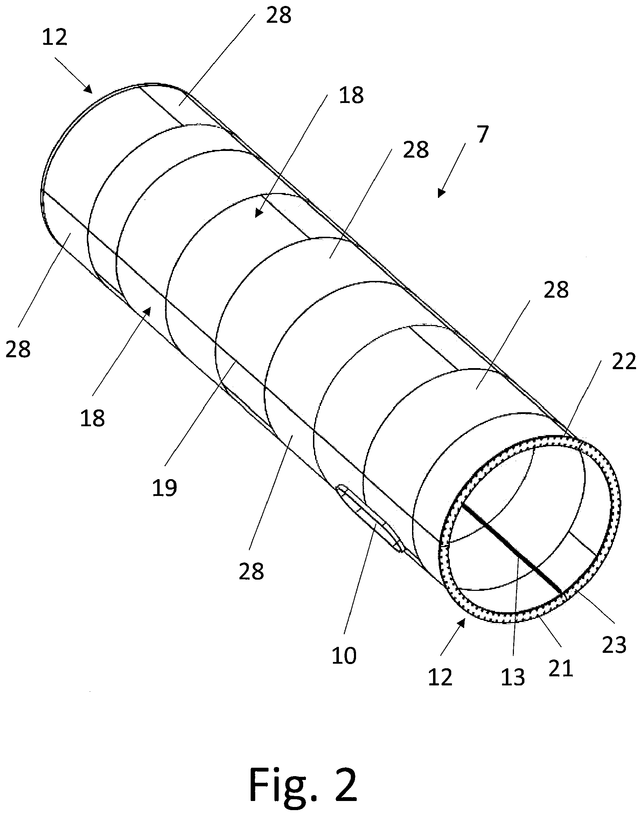

Fig. 1 zeigt eine Windenergieanlage 1 mit einem Turm, der als Stahlrohrturm 2 aus einer Anzahl gleicher und unterschiedlicher Turmsektionen 7, 8, 9 aufgebaut ist, wobei die unterste Turmsektion 7 in Fig. 2 detailliert dargestellt ist. Der Stahlrohrturm 2 trägt eine um eine vertikale Turmlängsachse drehbar gelagerte Gondel 4. In der Gondel 4 ist ein nicht dargestellter Antriebsstrang mit einer Hauptwelle, einem Getriebe und einem Generator gelagert. Die Hauptwelle steht in Wirkverbindung mit einer Rotornabe 5, an der drei Rotorblätter 6 um ihre Längsachse drehbar gelagert sind. Der Stahlrohrturm 2 umfasst neben der untersten Turmsektion 7, weitere Turmsektionen 8, 9, wobei die unteren Turmsektionen 7, 8, d. h., die mit größerem Durchmesser, aus lösbar verbunden Sektionssegmenten 18 bestehen, während die oberen Turmsektionen 9, d. h., die mit geringerem Durchmesser, als in Umfangsrichtung einstückige Sektionen ausgebildet sind.

Fig. 2 zeigt die untere Turmsektion 7 mit der Turmzugangstüröffnung 10. Die vorgefertigte Turmsektion 7 umfasst eine Anzahl von Sektionsabschnitten 28, die in Fachkreisen auch als "Schüsse" oder "cans" bezeichnet werden. Die Sektionsabschnitte 28 weisen vom Herstellungsprozess regelmäßig eine Längsschweißnaht auf. Weitere Turmsektionen 8 sind, ohne Turmzugangstüröffnung 10, entsprechend aufgebaut, wobei die Anzahl der Sektionsabschnitte 28 variieren kann. Im gezeigten Ausführungsbeispiel weist die Turmsektion 7 insgesamt neun Sektionsabschnitte 28 auf, welche an ihren Stirnseiten miteinander verschweißt sind. Die freien Stirnseiten der äußeren Sektionsabschnitte 28 einer Sektion sind jeweils mit einem Ringflansch 12 verschweißt. In einer vorteilhaften, nicht dargestellten Abwandlung werden die Ringflansche 12 bereits zuvor jeweils mit einem senkrecht angeordneten Sektionsabschnitt 28 verschweißt, bevor dieser mit den übrigen Sektionsabschnitten 28 verschweißt wird. Es ist bekannt, anstelle geschlossener Ringflansche einzelne Ringflanschsegmente an die freien Stirnseiten der äußeren Sektionsabschnitte einer Turmsektion anzuschweißen, was jedoch einen erhöhten Aufwand an Ausrichtarbeiten erfordert.

Wie die Figur 2 weiter erkennen lässt ist, sind die einzelnen Sektionsabschnitte 28 zueinander um ihre Längsachse derart verdreht, dass ihre Längsschweißnähte stets um einen Versatzwinkel gegeneinander versetzt sind, sodass die Längsschweißnähte benachbarter Sektionsabschnitte 28 nicht in einer Linie fluchten. Die Summe der Versatzwinkel ergibt bevorzugt 360° oder ein ganzzahliges Vielfaches davon. Die Fig. 2 zeigt ferner ein erstes Längsprofil 13 etwa in der 5-Uhr-Position, welches sich an der Innenseite der Wandung der Turmsektion 7 parallel zu deren Mittelachse erstreckt und mit der Wandung verschweißt ist. Neben dem gezeigten Längsprofil 13 weist die Turmsektion 7 zwei weitere, von außen nicht sichtbare Längsprofile 13 auf, die jeweils um 120° versetzt in der Rohrwandung angeordnet sind. In einem nachfolgenden Herstellungsschritt wird die Turmsektion 7 entlang einer ersten, zweiten und dritten geplanten Trennlinie 19 in drei Sektionssegmente 18 geteilt, wobei die geplanten Trennlinien 19 jeweils mit den Längsprofilen 13 zusammenfallen. Mit anderen Worten erfolgt der jeweilige Längsschnitt durch das Längsprofil 13, so dass die Sektionsegmente nachfolgend wieder über das Längsprofil miteinander verbunden werden können.

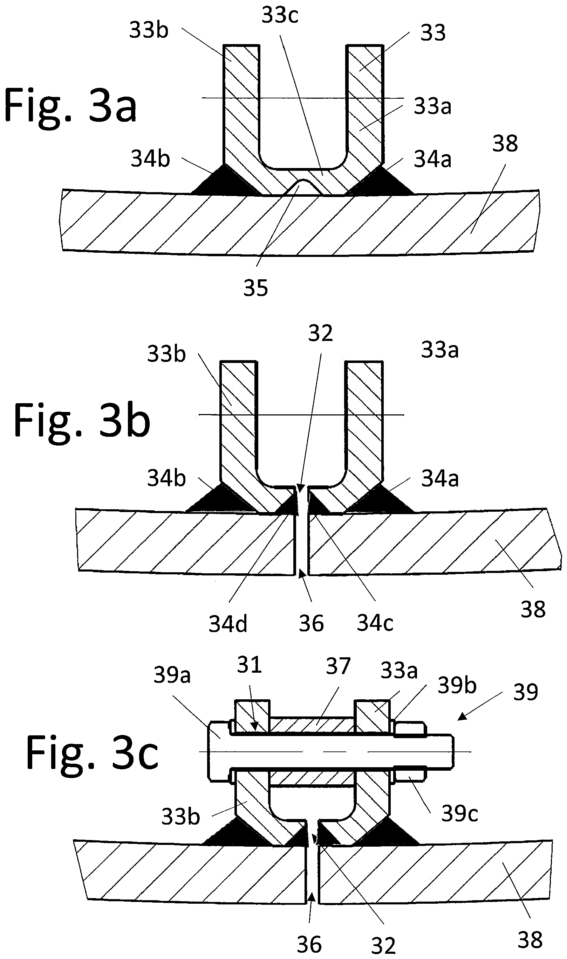

Die Fig. 3a, 3b, 3c zeigen ein mögliches Längsprofil 13 in Form eines U-Profils 33, welches gleichlange planparallele Schenkel 33a, 33b und einen die Schenkel miteinander verbindenden Steg 33c aufweist, in drei aufeinanderfolgenden Herstellungsschritten. Das U-Profil 33 wird zunächst mit seinem Steg 33c beidseitig durch die Schweißnähte 34a und 34b mit der noch ungeteilten Rohrwandung 38 verschweißt, wobei lediglich ein Ausschnitt der Rohrwandung 38 gezeigt ist. Der Steg 33c weist weiterhin auf der der Rohrwandung 38 zugewandten Seite eine Hohlkehle 35 auf, die zwei Funktionen erfüllt: Erstens wird eine vorteilhafte Querschnitts- und damit Materialreduzierung für einen nachfolgenden Längsschnitt erreicht, wobei ein erster Schlitz 36 in der Rohrwandung 38 der Turmsektion 7, 8 und ein zweiter Schlitz 32 im Steg 33c des U-Profils 33 erzeugt werden, vgl. Fig. 3b. Die Schlitze 36 und 32 werden bevorzugt in einem gemeinsamen Trennvorgang hergestellt. Jeder der Schlitze 32, 36 besitzt nach dem Durchtrennen ein Paar einander zugewandter Trennabschnitte, in denen die Trennung erfolgte. Zweitens wird beidseitig der Schlitzkante eine Hohlkehle für eine weitere Schweißnaht 34c, 34d auf jeder Seite geschaffen. Im Rahmen der Montage am Errichtungsort werden schließlich die Sektionssegmente 18 mittels Verbindungsmitteln 39, insbesondere bestehend aus Gewindebolzen 39a, welche durch Durchgangsbohrungen 31 in den Schenkeln 33a, 33b des durchtrennten Längsprofils geführt sind, und Muttern 39c sicher verbunden. Distanzelemente 37 tragen dabei Sorge für einen vorbestimmten Abstand bzw. für die Schlitzbreiten 32, 36, wie die Fig. 3c zeigt. Mit der Länge der Distanzelemente 37 lässt sich somit eine gewünschte Schlitzbreite 32, 36 vorteilhaft einstellen.

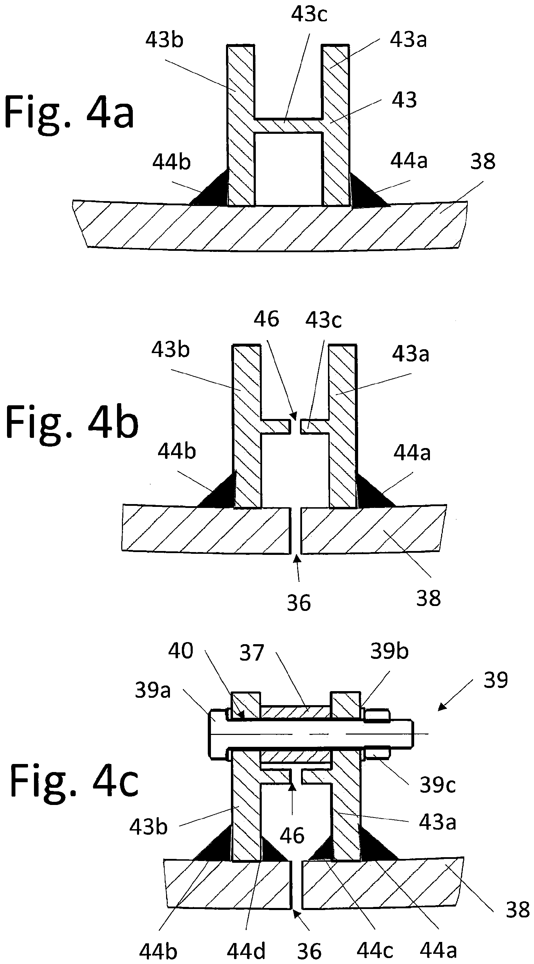

Die Fig. 4a, 4b, 4c zeigen eine weitere Anordnung aus Längsprofil 13 und Rohrwandung 38. Das Längsprofil 13 ist dort in Form eines H-Profils 43 ausgebildet, welches gleichlange planparallele Schenkel 43a, 43b und einen Steg 43c aufweist. Das H-Profil 43 wird zunächst beidseitig mit seinen Schenkeln 43a, 43b durch die Schweißnähte 44a und 44b mit der noch ungeteilten Rohrwandung 38 verschweißt. Die Fig. 4b zeigt die Anordnung bestehend aus dem Längsprofil 13 und der Rohrwandung 38 nach einem erfolgten Längsschnitt, wobei ein erster Schlitz 36 in der Rohrwandung 38 der Turmsektion 7, 8 und ein zweiter Schlitz 46 im Steg 43c des H-Profils 43 erzeugt wurden. Fig. 4c zeigt schließlich die im Rahmen der Montage am Errichtungsort durch Durchgangsbohrungen 40 der Schenkel 43a, 43b geführten Gewindebolzen 39a, Muttern 39c und Distanzelemente 37 und die somit sicher verbundenen Sektionssegmente 18, wobei wieder lediglich ein Ausschnitt der Rohrwandung 38 dargestellt ist.

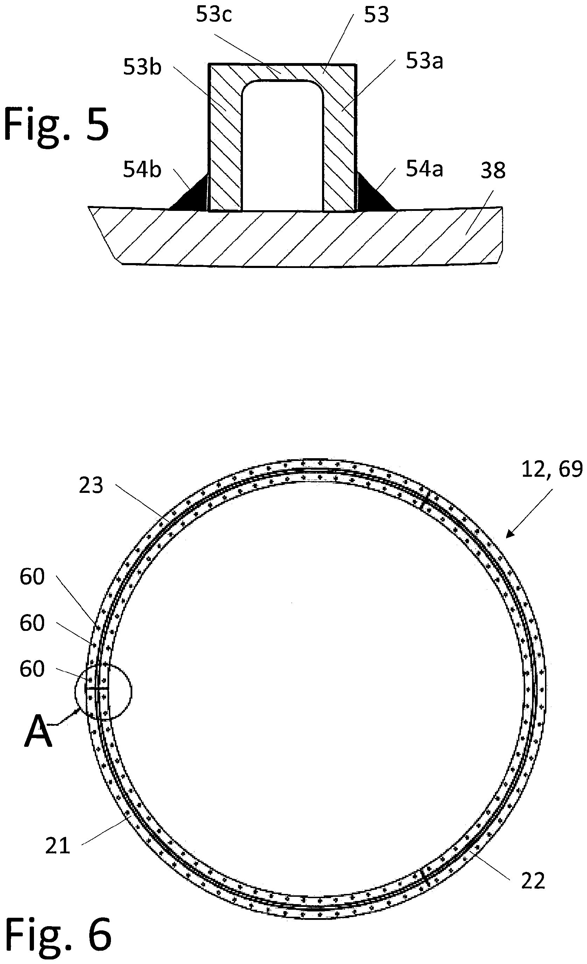

Die Fig. 5 zeigt ein Längsprofil 13 in Form eines weiteren U-Profils 53, welches jedoch gegenüber der Anordnung in Fig. 3a, 3b, 3c um seine Längsachse um 180° gedreht ist. Das U-Profil 53 wird im Gegensatz zum Ausführungsbeispiel gemäß Fig. 3a, 3b, 3c mit den Schenkeln 53a, 53b durch die Schweißnähte 54a und 54b mit der noch ungeteilten Rohrwandung 38 verschweißt. Die weiteren Herstellungsschritte sind im Wesentlichen wie in Fig. 4b und 4c dargestellt und wie dort beschrieben.

Eine nicht dargestellte weitere vorteilhafte Anordnung weist anstelle eines U-Profils 33 gemäß Fig. 3a, 3b, 3c ein nach oben offenes C-Profil auf. Das C-Profil hat im Gegensatz zum U-Profil 33 zwei nach innen gebogene rechtwinklige Verlängerungen der Schenkel, wobei die offenen Stirnflächen dieser Verlängerungen einander zugewandt sind und deren Abstand im Wesentlichen der Breite des Schlitzes im Steg entspricht. Das C-Profil hat den weiteren Vorteil, dass bei einer späteren Montage der Sektionssegmente 18 die Distanzelemente 37 verzichtbar sind, da die besagten Verlängerungen gegeneinander gezogen werden und somit die Funktion der Distanzelemente 37 übernehmen, wodurch sich eine vorteilhafte Reduzierung der Montagezeiten ergibt.

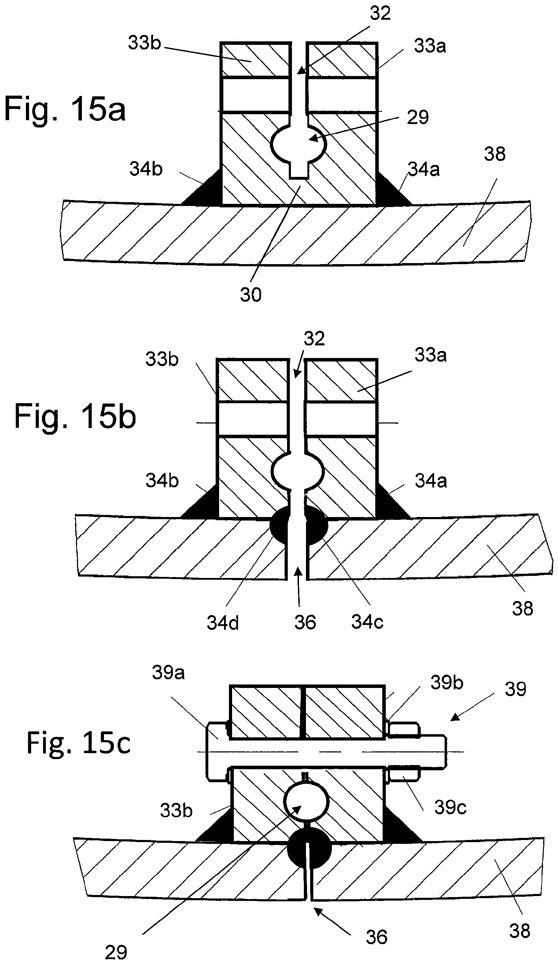

Neben den vorstehenden Profilen nach Fign 3, 4 und 5, die einen Steg aufweisen, der die Schenkel miteinander verbindet, zeigen Fig. 15a, 15b, 15c ein Längsprofil 30, das mit zwei seitlichen Schweißnähten 34a, 34b an die Rohrwandung geschweißt ist. Das Längsprofil 30 besitzt zwei Schenkel 33a, 33b, die durch eine Nut 32 voneinander getrennt sind. Die Nut 32 besitzt einen Nutgrund in dem Längsprofil 30. In der Nut ist eine Bohrung 29 vorgesehen, die sich in Längsrichtung des Längsprofils 30 erstreckt. Bei einem Durchtrennen der Turmwandung 38 im Bereich 36 wird auch der Nutgrund mit durchtrennt und die beiden Schenkel 33a, 33b sind unabhängig voneinander. Da die Breite des Trennschlitzes im Bereich 36 größer die Nutbreite 32 ist, bleiben die Schenkel ohne Stegabschnitte zurück. Auf den einander zugewandten Seiten der Schenkel tragen diese stattdessen Trennabschnitte, die durch das Durchtrennen der Turmwand und des Längsprofils gebildet werden. Die Schenkel 33a, 33b werden durch Schweißen an ihren einander zugewandten Seiten mit der Turmwandung 38 verbunden. Sollen die durchtrennten Sektionssegmente mit Hilfe des durchtrennten Längsprofils 30 wieder miteinander verbunden werden, so kann eine Ausrichtung durch einen Zentrierstift in der Bohrung 29 erfolgen. Durch den Zentrierstift werden die Schenkel 33a, 33b relativ zueinander ausgerichtet und können so über den Gewindebolzen 39a, die Unterlegscheibe 39b und die Mutter 39c aneinander befestigt werden.

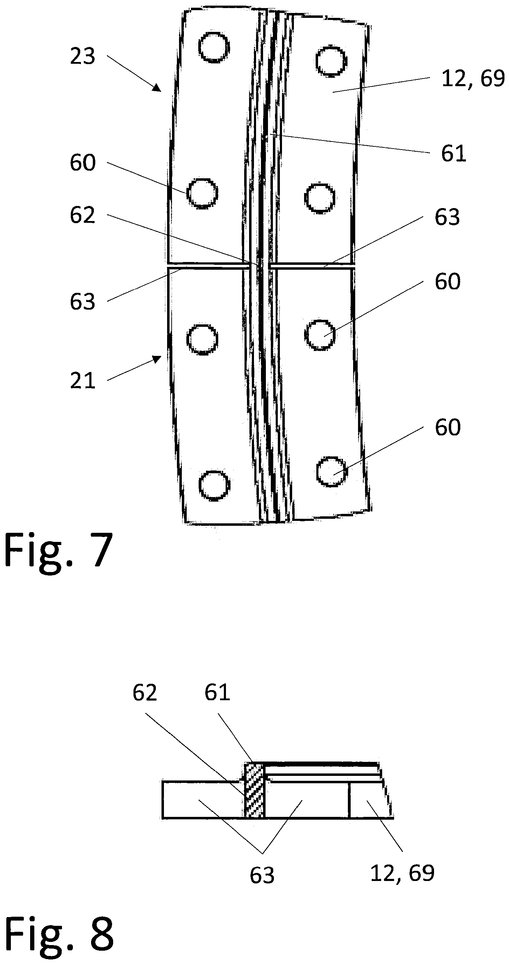

Die Fig. 6 zeigt eine Draufsicht eines Ringflansches 12 mit einem gekennzeichneten Detail "A". Die Fig. 7 zeigt einen vergrößerten Ausschnitt und die Fig. 8 eine Querschnittsansicht des Details "A". Der Ringflansch gemäß den Fign. 6, 7, 8 ist als T-Ringflansch 69 ausgeführt, welcher zum Anschluss der untersten Turmsektion 7 an das Fundament 3 und seine vorstehenden Ankerbolzen (nicht dargestellt) vorgesehen ist. Der T-Ringflansch 69 besitzt an vorbestimmten Positionen Teilungsabschnitte mit einer geringeren Materialstärke, an denen der Ringflansch in drei Ringflanschsegmente 21, 22, 23 teilbar ist. An jeder vorbestimmten Position eines Teilungsabschnitts ist der Querschnitt des T-Ringflansches 69 durch zwei Schlitze 63 reduziert, so dass lediglich eine schmale Segmentverbindung 62 verbleibt. Diese Segmentverbindung 62 wird später im Herstellungsprozess, nämlich erst nach dem Verschweißen des T-Ringflansches 69 mit einem Sektionsabschnitt 28 der Turmsektion 7 durchtrennt. Der T-Ringflansch 69 weist weiterhin eine Vielzahl von Durchgangsbohrungen 60 auf, die beidseitig des Stegs 61 in zwei konzentrischen Lochkreisen angeordnet sind.

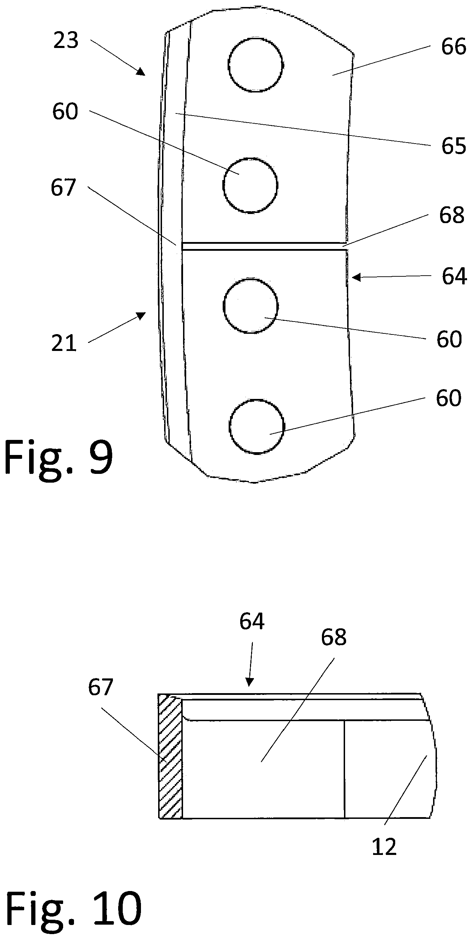

Zur Verbindung der Turmsektionen 7, 8, 9 untereinander sind Ringflansche 12 in Form von L-Ringflanschen 64 vorgesehen, die zwei rechtwinklig zueinander angeordnete Schenkel 65, 66 aufweisen, wie in Fig. 9, 10 dargestellt. Der erste, in Fig. 9 aus der Zeichenebene heraus gerichtete Schenkel 65 ist auf Stoß mit einem Sektionsabschnitt 28 der Turmsektion 7, 8 verschweißt und bildet somit einen Abschnitt der Außenhülle der Turmsektion 7, 8. Der zweite, in der Zeichenebene nach innen gerichtete Schenkel 66 weist eine Vielzahl von Durchgangsbohrungen 60 für Verbindungsmittel 39 auf, um den L-Ringflansch 64 mit dem angrenzenden L-Ringflansch 64 einer angrenzenden Turmsektion 7, 8 zu verbinden. Beide L-Ringflansche 64 bilden somit ein Ringflanschpaar. Wie die Fig. 9 und 10 wiederum erkennen lassen, ist der L-Ringflansch 64 an vorbestimmten Positionen mit Teilungsabschnitten ausgestattet, in denen der Ringflansch in drei Ringflanschsegmente 21, 22, 23 teilbar ist. An der vorbestimmten Position der Teilungsabschnitte ist der Querschnitt des L-Ringflansches 64 durch einen Schlitz 68 reduziert, wodurch eine schmale Segmentverbindung 67 besteht. Diese Segmentverbindung 67 wird später im Herstellungsprozess nach dem Verschweißen des L-Ringflansches 64 mit einem Sektionsabschnitt 28 durchtrennt. Die Segmentverbindung 67 bildet den Teilungsabschnitt für den L-Ringflansch 64.

Die Auswahl der Verbindungsmittel 39 ist dabei nicht auf Gewindebolzen 39a, Unterlegscheiben 39b und Muttern 39c beschränkt, sondern es sind vielmehr andere Verbindungsmittel, insbesondere Schraubverbindungen wie beispielsweise Gewindestangen mit beidseitig vorgesehen Muttern, Gewindehülsen mit beidseitig vorgesehen Gewindebolzen, etc. ebenfalls geeignet.

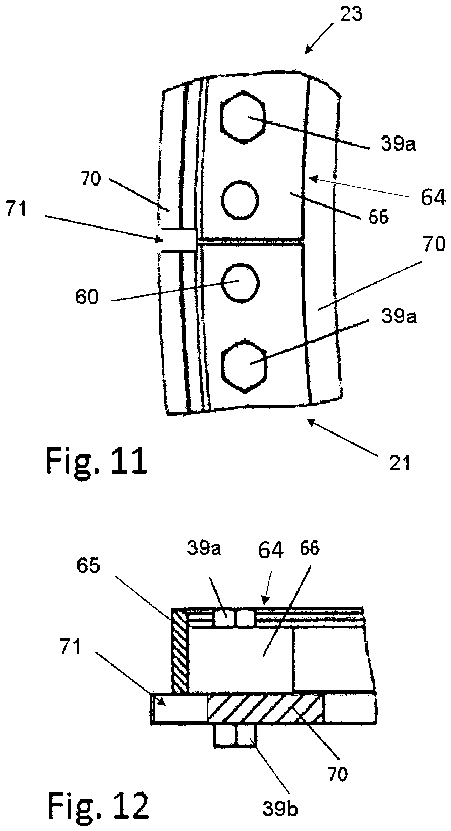

Die Fig. 11 zeigt eine Draufsicht und Fig. 12 eine Schnittansicht eines Ausschnitts einer an einem L-Ringflansch 64 einer Turmsektion montierten Adapterplatte 70, welche zum Anschluss oder Halterung der Turmsektion während einer weiteren Bearbeitung und insbesondere während eines Durchtrennens der Turmsektion dient. Der L- Ringflansch 64 ist durch eine Schraubverbindung, bestehend aus Gewindebolzen 39a und Muttern 39c, mit der Adapterplatte 70 verbunden. Die Adapterplatte 70 weist einen einseitigen Schlitz 71 zum Durchtritt eines Schneidwerkzeugs 99 auf. Nach einem Durchtrennen der Segmentverbindung 67 in dem Teilungsabschnitt bleiben die Ringflanschsegmente 21, 22, 23 mit der Adapterplatte 70 verbunden und sind somit in ihrer Lage fixiert.

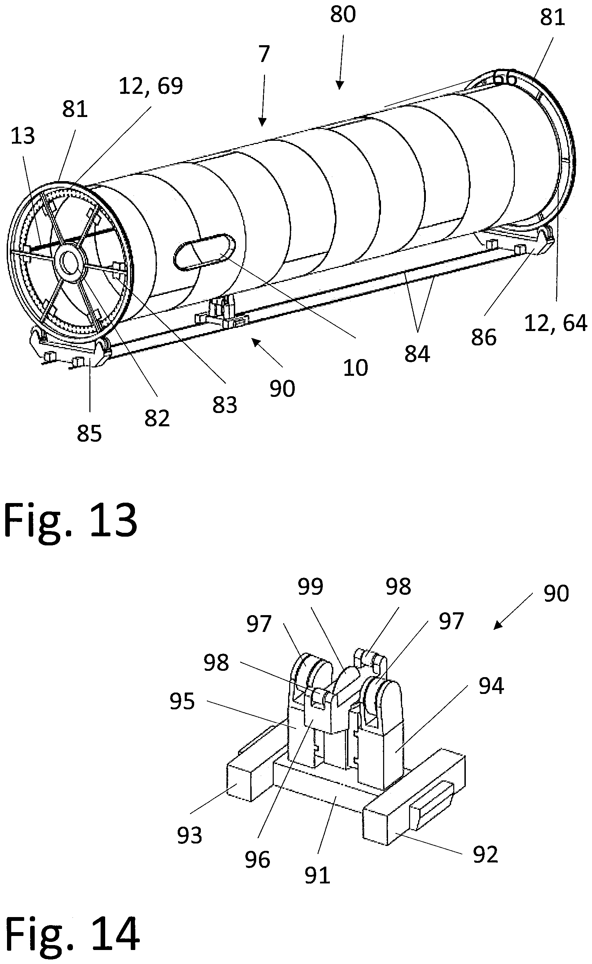

Die Fig. 13 zeigt eine perspektivische Gesamtansicht einer Turmsektion 7 in einer Halteeinrichtung 80 zum Längsschneiden von Turmsektionen in ihrer 6-Uhr-Position. Die Halteeinrichtung 80 umfasst zwei drehbare Aufnahmeräder 81, welche auf auf Schienen 84 geführten Rollenlagern 85, 86 abgestützt sind, wobei die Rollen der Rollenlager 85, 86 mittels Elektromotoren angetrieben sein können. Die drehbaren Aufnahmeräder 81 sind jeweils mit einem Ringflansch 12 an den Stirnseiten der Turmsektion 7, 8 direkt oder mittels einer Adapterplatte 70 verbunden. Die Aufnahmeräder 81 weisen eine Radnabe 82 auf, welche durch Speichen 83 mit einem Außenring verbunden ist. In einer nicht dargestellten Abwandlung können die Aufnahmeräder 81 anstatt auf Rollenlagern 85, 86 mittels Aufnahmedornen in der Radnabe 82 drehbar gelagert sein. Auf den Schienen 84 ist eine Schneideinrichtung 90 mittels eines Vorschubantriebs bewegbar angeordnet, wobei sich der Verfahrweg der Schneideinrichtung 90 über die gesamte Länge einer Turmsektion erstreckt.

Die Fig. 14 zeigt eine perspektivische Ansicht der Schneideinrichtung 90 zum Längsschneiden von Turmsektionen 7, 8 in 6-Uhr-Position. Die Schneideinrichtung 90 umfasst ein Schneidwerkzeug 99, das bevorzugt als Scheibenfräser oder Sägeblatt ausgebildet ist. Das Schneidwerkzeug 99 ist drehbar in einem vertikal verstellbaren Werkzeugträger 96 gelagert. Der Werkzeugträger 96 umfasst zudem Führungsrollen 98. Beidseitig des Schneidwerkzeugs 99 und des Werkzeugträgers 96 sind Stützrollen 97 nebst Stützrollenhubeinrichtungen 94, 95 vorgesehen, die eine stets gleiche Schnitttiefe des Schneidwerkzeugs 99 in das Material, insbesondere in die Rohrwandung 38 einer Turmsektion 7, 8 sicherstellen. Der Werkzeugträger 96 und die Stützrollenhubeinrichtungen 94, 95 sind auf einem Querträger 91 gehalten, welcher zwei Antriebsrahmen 92, 93 für zwei nicht dargestellte Vorschubantriebe verbindet. Die Vorschubantriebe treiben im Gleichlauf die Antriebsräder an, welche auf den Schienen 84 geführt sind.

Ein nicht dargestelltes Ausführungsbeispiel weist separate höhenverstellbare Stempel zum Anheben der in der Halteeinrichtung gelagerten Turmsektion zwecks Kompensation einer Durchbiegung auf, welche aus der Gewichtskraft der gelagerten Turmsektion zwischen ihren Auflagerpunkten resultiert. Um die Stempel in der Höhe optimal - im Sinne einer geraden Schnittlinie - zu positionieren, ist wenigstens ein optischer Sensor vorgesehen, der in einen Regelkreis für eine Regelung der Stempelhöhe eingebunden ist. Die Schneideinrichtung 90 ist mittels wenigstens eines Vorschubantriebs bewegbar auf Schienen gelagert und geführt. Durch die von der Schneideinrichtung 90 unabhängigen Stempel wird die Belastung der Schneideinrichtung, insbesondere um die nicht aufzunehmende Gewichtskraft, erheblich reduziert. Die Schneideinrichtung gemäß diesem zweiten Ausführungsbeispiel kann aufgrund der Funktionstrennung gegenüber der Schneideinrichtung 90 im Ausführungsbeispiel gemäß Fig. 13 und Fig. 14 einfacher ausgebildet sein, insbesondere sind die dort gezeigten Stützrollen 97 nebst Stützrollenhubeinrichtung 94, 95 verzichtbar. Ein weiterer Vorteil besteht darin, dass die Vorschubantriebe der Schneideinrichtung 90 lediglich eine Leistung entsprechend der Vorschub-/Schnittkraft aufbringen müssen.

Eine weitere nicht dargestellte, besonders vorteilhafte Stützvorrichtung weist als Lagerbett für eine zu bearbeitende Turmsektion 7, 8 zwei beabstandete, horizontal angeordnete Träger auf, welche paarweise angeordnet schräge oder konkave Aufnahmen aufweisen. Der Abstand der Träger ist größer als die größte Breite der Schneideinrichtung, so dass diese auf den Schienen unterhalb der Turmsektion frei bewegbar ist, wobei die Schienen vorzugsweise in einem Kanal im Boden quasi unterflur verlegt sind. Die Schneideinrichtung ist durch wenigstens einen Vorschubantrieb antreibbar. Diese Schneideinrichtung kann wiederum gegenüber der Schneideinrichtung 90 gemäß dem Ausführungsbeispiel in den Figuren 13 und 14 einfacher ausgebildet sein, insbesondere sind die dort gezeigten Stützrollen 97 nebst Stützrollenhubeinrichtung 94, 95 verzichtbar. Ein weiterer Vorteil besteht darin, dass die Vorschubantriebe der Schneideinrichtung 90 lediglich für eine Leistung entsprechend der Vorschub- und Schnittkraft ausgelegt sein müssen, da diese keine Stützlastkomponente überwinden müssen.

### Bezugszeichenliste

- 1: Windenergieanlage
- 2: Stahlrohrturm
- 3: Fundament
- 4: Gondel
- 5: Rotornabe
- 6: Rotorblatt
- 7, 8, 9: Turmsektion
- 10: Turmzugangstüröffnung
- 11: Sektionstrennung
- 12: Ringflansch
- 13: Längsprofil
- 18: Sektionssegment
- 19: Trennlinie
- 21, 22, 23: Ringflanschsegment
- 28: Sektionsabschnitt
- 29: Bohrung
- 31: Bohrung
- 32, 36: Schlitz
- 33, 53: U-Profil
- 33a, 33b: Schenkel
- 33c, 53c: Steg
- 34a, 34b, 54a, 54b: Schweißnaht
- 34c, 34d: Schweißnaht
- 35: Hohlkehle
- 37: Distanzelement
- 38: Rohrwandung
- 39: Verbindungsmittel
- 39a: Gewindebolzen
- 39b: Unterlegscheibe
- 39c: Mutter
- 40, 60: Durchgangsbohrung
- 43: H-Profil
- 43a, 43b: Schenkel
- 43c: Steg
- 44a, 44b, 44c, 44d: Schweißnaht
- 46: Schlitz
- 61: Steg
- 62, 67: Segmentverbindung
- 63, 68: Schlitz
- 64: L-Ringflansch
- 65, 66: Schenkel
- 69: T-Ringflansch
- 70: Adapterplatte
- 80: Bearbeitungsstation
- 81: Aufnahmerad
- 82: Radnabe
- 83: Speiche
- 84: Schiene
- 85, 86: Rollenlager
- 90: Trenneinrichtung
- 91: Querträger
- 92, 93: Antriebsrahmen
- 94, 95: Stützrollenhubeinrichtung
- 96: Werkzeugträger
- 97: Stützrolle
- 98: Führungsrolle
- 99: Schneidwerkzeug

## Patentansprüche

1. Stahlturm (2) für eine Windenergieanlage (1), der eine Mehrzahl von zylindrischen und/oder konischen Turmsektionen (7, 8, 9) in einer Turmlängsrichtung aufweist, wenigstens eine der Turmsektionen (7, 8, 9) ist in Umfangsrichtung in zwei oder mehr Sektionssegmente (18) geteilt, wobei zwei Sektionssegmente (18) jeweils über sich in Turmlängsrichtung erstreckende Abschnitte eines Längsprofils (13) miteinander verbunden sind, die jeweils einen an einem zugehörigen Sektionssegment befestigten Schenkel aufweisen und zwei Schenkel über eine Segmentgrenze hinweg miteinander verbunden sind, wobei jeder der Schenkel auf einer anderen Seite der Segmentgrenze angeordnet ist, **dadurch gekennzeichnet, dass** jeder Schenkel einen sich zu der Segmentgrenze hin erstreckenden Stegabschnitt aufweist und die Stegabschnitte und die Schenkel des Längsprofils vor einer Trennung der Sektionssegmente ein einstückiges Längsprofil bildeten.

2. Stahlturm nach Anspruch 1, **dadurch gekennzeichnet, dass** die Stegabschnitte auf ihren einander zugewandten Seiten jeweils einen Trennabschnitt besitzen.

3. Stahlturm (2) für eine Windenergieanlage (1), der eine Mehrzahl von zylindrischen und/oder konischen Turmsektionen (7, 8, 9) in einer Turmlängsrichtung aufweist, wenigstens eine der Turmsektionen (7, 8, 9) ist in Umfangsrichtung in zwei oder mehr Sektionssegmente (18) geteilt, wobei zwei Sektionssegmente (18) jeweils über sich in Turmlängsrichtung erstreckende Abschnitte eines Längsprofils (13) miteinander verbunden sind, die jeweils einen an einem zugehörigen Sektionssegment befestigten Schenkel aufweisen, wobei jeder Schenkel auf einer anderen Seite der Segmentgrenze angeordnet ist, **dadurch gekennzeichnet, dass** die Schenkel jeweils auf ihren einander zugewandten Seiten einen zur Segmentgrenze weisenden Trennabschnitt aufweisen und die Schenkel mit ihren Trennabschnitten vor einer Trennung der Sektionssegmente ein einstückiges Längsprofil (13) bildeten.

4. Stahlturm (2) nach einem der Ansprüche 1 bis 3, **dadurch gekennzeichnet, dass** die Turmsektion (7, 8, 9) wenigstens zwei Sektionsabschnitte (28) umfasst, die entlang ihrer aneinander angrenzenden horizontalen Stirnseiten zusammengeschweißt sind und entlang der freien obersten und untersten Stirnseite mit horizontalen Ringflanschen (12) verschweißt sind, wobei die Ringflansche (12) an vorbestimmten Positionen in wenigstens zwei, vorzugsweise drei Ringflanschsegmente (21, 22, 23) geteilt sind.

5. Stahlturm (2) nach einem der Ansprüche 1 bis 4, **dadurch gekennzeichnet, dass** jedes Sektionssegment (18) einer Turmsektion (7, 8) an seiner oberen Stirnseite und an seiner unteren Stirnseite wenigstens je ein oberes bzw. ein unteres Ringflanschsegment (21, 22, 23) aufweist, wobei die Ringflanschsegmente (21, 22, 23) eine Mehrzahl von Durchgangsbohrungen (60) für Verbindungsmittel (39) aufweisen.

6. Stahlturm (2) nach einem der Ansprüche 1 bis 5, **dadurch gekennzeichnet, dass** das einstückige Längsprofil (13) als ein U-Profil (33, 53), H-Profil (43), C-Profil, 1-Profil, Hut-Profil oder ein Doppel-T-Profil ausgebildet ist.

7. Stahlturm (2) nach Anspruch 6, **dadurch gekennzeichnet, dass** das einstückige Längsprofil (13) den Steg aufweist, der eine nach außen gerichtete Hohlkehle (35) in Turmlängsrichtung aufweist.

8. Stahlturm (2) nach einem der Ansprüche 1 bis 7, **dadurch gekennzeichnet, dass** das einstückige Längsprofil (13) vor der Trennung der Sektionssegmente einen Profilkörper mit einer von einer Turmwand fortweisenden Nut (32) aufweist und nach der Trennung der Sektionssegmente der Profilkörper zwei getrennte Schenkel aufweist, die auf ihren einander zugewandten Seiten einen Trennabschnitt aufweisen, der bei der gemeinsamen Trennung von Sektionssegmenten und Profilkörper gebildet wurde.

9. Stahlturm (2) nach einem der Ansprüche 1 bis 8, **dadurch gekennzeichnet, dass** das einstückige Längsprofil (13) an den nach außen gerichteten Übergängen seiner Schenkel (33a, 33b, 53a, 53b) jeweils eine Fase in Turmlängsrichtung zur Aufnahme einer Schweißnaht (34a, 34b, 44a, 44b, 54a, 54b) aufweist.

10. Stahlturm (2) nach einem der Ansprüche 1 bis 9, **dadurch gekennzeichnet, dass** die einstückigen Längsprofile (13) parallel zueinander angeschweißt sind und die Anzahl der parallelen Längsprofile (13) gleich der Anzahl der Sektionssegmente (18) einer Turmsektion (7, 8) ist.

11. Stahlturm (2) nach einem der vorhergehenden Ansprüche, **dadurch gekennzeichnet, dass** für mindestens einen Sektionsabschnitt (28) die Länge der Längsprofile (13) in Turmlängsrichtung größer als die Länge des mindestens einen Sektionsabschnitts (28) ist.

12. Stahlturm (2) nach einem der vorhergehenden Ansprüche, **dadurch gekennzeichnet, dass** wenigstens eines der Sektionssegments (18) einer Turmsektion (7, 8) mit vorinstallierten Einbauten versehen ist.

13. Verfahren zum Herstellen eines Stahlturms (2) für eine Windenergieanlage (1), das folgende Verfahrensschritte aufweist:
- Herstellen von mehreren zylindrischen und/oder konischen Turmsektionen (7, 8, 9), die in einer Turmlängsrichtung übereinander angeordnet werden können,
- Definieren von mindestens zwei in Turmlängsrichtung verlaufenden geplanten Trennlinien für eine der Turmsektionen und Bereitstellen eines Längsprofils für die geplante Trennlinie, das zwei parallel und beabstandet zueinander verlaufende Schenkel aufweist, wobei das Längsprofil mit seinen Schenkeln einstückig ausgebildet ist,
- Verbinden des Längsprofils mit der Turmsektion, wobei die Schenkel auf gegenüberliegenden Seiten der Trennlinie mit der Turmsektion verbunden werden,
- Durchtrennen der Turmsektion entlang der Trennlinie in durch eine Segmentgrenze voneinander getrennte Sektionssegmente, wobei das einstückige Längsprofil mit durchtrennt wird und jeder der Schenkel auf einer anderen Seite der Segmentgrenze mit einem Sektionssegment verbunden bleibt,
- Verbinden von zwei oder mehr Sektionssegmenten über die Schenkel des durchtrennten Längsprofils zu einer Turmsektion und
- Verbinden mehreren Turmsektionen in Turmlängsrichtung zu einem Stahlturm.

14. Verfahren nach Anspruch 13, **dadurch gekennzeichnet, dass** das einstückige Längsprofil zwei parallel zueinander verlaufende und durch einen Steg miteinander verbundene Schenkel aufweist, wobei bei dem Durchtrennen der Turmsektion der Steg mitdurchtrennt wird.

15. Verfahren nach Anspruch 13, **dadurch gekennzeichnet, dass** das Längsprofil vor der Durchtrennung der Sektionssegmente einen Profilkörper mit einer auf einer von einer Turmwand fortweisenden Seite angeordneten Nut und nach der Trennung der Sektionssegmente zwei Schenkel aufweist, die auf ihren einander zugewandten Seiten einen Trennabschnitt aufweisen, der bei der gemeinsamen Durchtrennung der Sektionssegmente und des Längsprofils gebildet worden ist.

16. Verfahren nach einem der Ansprüche 13 bis 15, **dadurch gekennzeichnet, dass** die Turmsektion mittels eines Hebezeugs oder eines Flurförderzeugs oberhalb wenigstens einer bewegbaren Schneideinrichtung (90) derart verbracht und auf Stützmitteln abgesetzt wird, dass die erste geplante Trennlinie (19) in einer 6-Uhr-Position positioniert ist.

17. Verfahren nach einem der Ansprüche 13 bis 16, **gekennzeichnet durch** einen weiteren Verfahrensschritt, bei dem ein geschlossener Ringflansch (12) in einer, auf die Umfangsrichtung bezogen, vorbestimmten Lage zur Bildung einer Turmsektion (7, 8) an die Turmsektion und/oder an eine Stirnflächen eines Sektionsabschnitts (28) angeschweißt wird, wobei der Ringflansch (12) an vorbestimmten Positionen einen reduzierten Querschnitt aufweist und die vorbestimmten Positionen mit den geplanten Trennlinien (19) der Turmsektion zusammenfallen.

18. Verfahren nach Anspruch 17, **gekennzeichnet durch** einen weiteren Verfahrensschritt, bei dem der geschlossene Ringflansch (12) stirnseitig jeweils mit einem Aufnahmerad (81) verbunden wird und die Turmsektion über die Aufnahmeräder in eine gewünschte Position gedreht wird.

19. Verfahren nach einem der Ansprüche 13 bis 18, **gekennzeichnet durch** den Verfahrensschritt, dass die Turmsektion mittels eines Hebezeugs oder eines Flurförderzeugs auf eine Halteeinrichtung mit zwei voneinander beabstandeten Auflagebereichen abgesetzt wird, wobei die Turmsektion (7, 8) derart positioniert wird, dass die erste geplante Trennlinie (19) in einer 6-Uhr-Position zwischen den Auflagebereichen verläuft.

20. Verfahren nach Anspruch 13 oder 19, **gekennzeichnet durch** den Verfahrensschritt, dass wenigstens eine bewegbare Schneideinrichtung (90) benachbart zu einem ersten Ringflansch (12) in eine Startposition bewegt wird und anschließend das Schneidwerkzeug (99) mittels eines vertikal bewegbaren Werkzeugträgers (96) mit dem ersten Ringflansch (12) an der ersten vorbestimmten Position in Kontakt gebracht wird.

21. Verfahren nach Anspruch 20, **dadurch gekennzeichnet, dass** mit dem Schneidwerkzeug (99) der erste Ringflansch (12) an einer ersten vorbestimmten Position mit reduziertem Querschnitt durchtrennt wird und unmittelbar nachfolgend das Schneidwerkzeug (99) kontinuierlich entlang der ersten Trennlinie (19) durch die Rohrwandung (38) sowie das mit der Rohrwandung verbundene Längsprofil (13) geführt wird.
